# EUROPÄISCHE PATENTANMELDUNG

(11) **EP 2 366 660 A1**
(43) Veröffentlichungstag der Anmeldung: **21.09.2011**
(21) Anmeldenummer: 11001671.4
(22) Anmeldetag: 01.03.2011
(51) Int. Cl.: C01B 3/22, C01B 3/32, C01B 3/38

(54) **Vergasung von Rohglyzerin**

(30) Priorität: 09.03.2010 DE 102010010738
(71) Anmelder: Linde AG, 80331 München (DE)
(72) Erfinder: Winkler, Hubertus, Dr., 82491 Grainau (DE); Wiessner, Frank, 82049 Pullach (DE); Behrens, Axel, Dr., 80689 München (DE); Korn, Wibke, 81477 München (DE)

(57) **Zusammenfassung**

Ein Verfahren (20) zur Aufbereitung (1, 2) eines glycerinhaltigen Eduktgemischs (G) zu einem Zwischenprodukt (I), insbesondere in einem Verfahren (10) zur Erzeugung eines wasserstoffhaltigen Produktgemischs (H) aus dem Zwischenprodukt (l) mittels Pyrolyse (3) unter Erhalt eines Pyrolyseprodukts (P) und Umsetzung (4) des Pyrolyseprodukts (P) beinhaltet, dass die Aufbereitung (1, 2) unter zumindest teilweisem Verdampfen (1) des Eduktgemischs (G) durch Dünnschichtverdampfung unter Erhalt eines Verdampfungsprodukts (V) erfolgt.

## Beschreibung

Die vorliegende Erfindung betrifft ein Verfahren zur Aufbereitung eines glycerinhaltigen Eduktgemischs zu einem Zwischenprodukt, ein Verfahren zur Erzeugung eines wasserstoffhaltigen Produktgemischs aus dem Zwischenprodukt, sowie eine entsprechende Vorrichtung.

### Stand der Technik

Im Bestreben, den Kohlendioxideintrag in die Erdatmosphäre zu senken oder zumindest nicht weiter anwachsen zu lassen, und als Alternativen zu den schwindenden Erdöl- und Erdgasreserven, werden in Zukunft verstärkt Energieträger aus nachwachsenden Rohstoffen zum Einsatz kommen. Gemäß einer EU-Richtlinie sollen in der Europäischen Union bis zum Jahr 2010 mindestens 5,75% des Kraftstoffbedarfs durch derartige Energieträger gedeckt werden. Eine herausragende Rolle spielt hierbei Biodiesel, der bereits heute in einer Konzentration von bis zu fünf Prozent dem an deutschen Tankstellen verfügbaren Dieselkraftstoff zugesetzt ist.

Biodiesel ist ein genormter Kraftstoff, der in Europa vor allem aus Rapsöl, aber auch aus anderen pflanzlichen Ölen und -fetten wie Sojaöl gewonnen wird. Bei derartigen Ölen und Fetten handelt es sich um Triglyceride, also Glycerintriester unterschiedlicher Fettsäuren. Pflanzenöle und -fette sind bei normalen Umgebungstemperaturen zähflüssig bis fest, besitzen also eine viel höhere Viskosität als die Kraftstoffe, für die ein marktüblicher Dieselmotor ausgelegt ist. Pflanzenöle und -fette weichen zudem in ihrem Einspritzverhalten und ihren Verbrennungseigenschaften (Flammpunkt, Cetanzahl, Rückstände) von herkömmlichen Kraftstoffen ab. Diese Nachteile lassen sich auch durch motorische Eingriffe wie beispielsweise die Vorwärmung des Pflanzenöls nur unvollkommen kompensieren. Zudem erfordern derartige motorische Eingriffe in der Regel einen kostspieligen Umbau entsprechender Fahrzeuge.

Biodiesel wird durch Umesterung der Fettsäuren der Triglyceride mit Alkohol, beispielsweise Methanol, hergestellt. Die Viskosität, das Einspritzverhalten und die Verbrennungseigenschaften von Biodiesel entsprechen weitgehend handelsüblichem Dieselkraftstoff, weshalb Biodiesel zumindest bis zu einem gewissen Anteil problemlos auch in unmodifizierten Dieselmotoren einsetzbar ist.

Das bei der Umesterung resultierende Glycerin fällt nicht in reiner Form an, sondern bildet einen Teil eines Stoffgemischs. Ein derartiges Rohglycerin weist einen Glyceringehalt von 80 - 85% auf, enthält zusätzlich aber auch noch größere Mengen Wasser und Salze, Reststoffe aus dem Produktionsprozess (Lösungsmittel und Katalysatorrückstände) sowie organische Komponenten (MONG, Material Organic Non Glycerol). Gemäß dem Stand der Technik wird Rohglycerin beispielsweise in aufwendigen Verfahrensschritten durch Vakuumdestillation, Desodorierung und Filtration so weit aufgereinigt, dass es den Anforderungen des Europäischen Arzneimittelbuches (European Pharmacopeion) genügt und mit einer Reinheit von mindestens 99,5% als sogenanntes Pharmaglycerin an die pharmazeutische Industrie verkauft werden kann.

Gegenwärtig kann die gesamte bei der Biodieselherstellung anfallende Glycerinmenge auf diese Weise verwertet werden. Mit der absehbaren Ausweitung der Biodieselproduktion sind jedoch in Zukunft Überkapazitäten an Glycerin zu erwarten, so dass hierfür andere wirtschaftlich sinnvolle Verwertungswege erforderlich sind.

Neben Biodiesel handelt es sich auch bei Wasserstoff bekanntermaßen um einen zunehmend genutzten regenerativen Energieträger, der herkömmlicherweise durch Elektrolyse von Wasser gewonnen wird. Die zunehmende Verwendung von Wasserstoff in Fahrzeugmotoren und Anlagen zur Energiegewinnung, insbesondere im Zusammenhang mit der Brennstoffzellentechnologie und mit neuen Verfahren zur Wasserstoffspeicherung, lässt für die Zukunft einen erhöhten Bedarf an Wasserstoff erwarten. Da die Herstellung von Wasserstoff aus Glycerin prinzipiell bekannt ist, handelt es sich bei der Produktion von Wasserstoff um einen attraktiven Verwertungsweg für Rohglycerin, der geeignet erscheint, den erhöhten Bedarf an Wasserstoff wenigstens teilweise zu bedienen.

Zur Herstellung von Wasserstoff aus sauerstoffhaltigen Kohlenwasserstoffen wie Glycerin, aber auch aus Biomasse, ist beispielsweise die Dampfreformierung nach oder unter gleichzeitiger pyrolytischer Umsetzung üblich. Hierzu kommen häufig Nickelkatalysatoren auf geeigneten Trägermaterialien zum Einsatz. Die Einsatzstoffe werden hierbei in der Regel vorgewärmt und zusammen mit Wasserdampf über den Katalysator geführt. Hierzu sind bei 400 - 900 °C oder mehr ablaufende Hochtemperaturverfahren, aber auch Niedrigtemperaturverfahren, wie beispielsweise in der US 6 964 757 B2, der US 6 964 758 B2 und der US 6 699 457 B2 offenbart, bekannt.

Anschließend kann zur Einstellung des gewünschten Wasserstoff/Kohlenmonoxid-Verhältnisses und/oder zur Aufreinigung des Wasserstoffs beispielsweise die Wassergas-Shiftreaktion, ein Membranverfahren und/oder die Druckwechseladsorption verwendet werden.

Der direkten Weiterverarbeitung von Rohglycerin durch Pyrolyse und Dampfreformierung (im folgenden auch als Pyroreforming bezeichnet), stehen dessen oben erwähnte Verunreinigungen sowie die durch unterschiedliche Quellen und Herstellungsverfahren bedingten Qualitätsunterschiede entgegen. Insbesondere Salze können in wässrigen Medien zur Korrosion von Anlagenbauteilen führen und eingesetzte Katalysatoren deaktivieren. Auch organische Verunreinigungen sind nur schwer zu beherrschen und können zu Ablagerungen und der Bildung von Ruß führen. Bekannte Verfahren verwenden daher in der Regel entsprechend gereinigtes (Pharma-)Glycerin, dessen Herstellung jedoch aufgrund des apparativen Aufwandes mit hohen Kosten verbunden ist.

Die DE 10 2007 007 022 962 A1 und die DE 10 2007 060 166 A1 der Anmelderin adressieren diese Probleme und schlagen die Abtrennung unerwünschter Stoffe aus dem Rohglycerin vor der Pyrolyse, beispielsweise durch thermische Trocknung oder Vakuumdestillation, vor. Hingegen ist beispielsweise der DE 10 2007 045 360 A1 der Anmelderin ein Verfahren zu entnehmen, bei dem ein Pyrolyseverfahren so geführt wird, dass bei einem Einsatz von Rohglycerin gebildete Rückstände kontinuierlich abgezogen werden können.

Die Verfahren des Standes der Technik sind jedoch, insbesondere unter energetischen und/oder apparativen Aspekten, häufig unvorteilhaft.

Aufgabe der vorliegenden Erfindung ist es daher, ein Verfahren der gattungsgemäßen Art anzugeben, das es ermöglicht, insbesondere bei der Biodieselherstellung anfallende und Glycerin enthaltende Nebenprodukte einer wirtschaftlichen Verwertung zuzuführen, und durch welches die Nachteile des Standes der Technik überwunden werden.

### Offenbarung der Erfindung

Diese Aufgabe wird gelöst durch ein Verfahren zur Aufbereitung eines glycerinhaltigen Eduktgemischs zu einem Zwischenprodukt, ein Verfahren zur Erzeugung eines wasserstoffhaltigen Produktgemischs aus dem Zwischenprodukt sowie eine entsprechende Vorrichtung mit den Merkmalen der unabhängigen Patentansprüche. Bevorzugte Ausgestaltungen sind Gegenstand der Unteransprüche sowie der nachfolgenden Beschreibung.

### Vorteile der Erfindung

Erfindungsgemäß erfolgt die Aufbereitung eines glycerinhaltigen Eduktgemischs beispielsweise von Rohglycerin aus der Biodieselherstellung, zumindest teilweise durch Dünnschichtverdampfung, wodurch ein entsprechendes Verdampfungsprodukt erhalten wird.

Es konnte herausgefunden werden, dass die Dünnschichtverdampfung insbesondere eine Abtrennung von Salzen, die für nachfolgende Verfahrensschritte schädlich sein können, besonders einfach und kostengünstig ermöglicht. Andere Komponenten, insbesondere Wasser und bestimmte MONG-Bestandteile, die die nachfolgenden Verfahrensschritte nicht notwendigerweise beeinträchtigen, können hingegen teilweise in das Verdampfungsprodukt (Brüden) gelangen und damit beispielsweise in eine nachfolgende Pyrolyseeinrichtung überführt werden. Die dabei entsprechend ihrem Siedepunkt in die Gasphase übergehenden Komponenten lassen sich gezielt durch die Wahl geeigneter Temperatur- und Druckbedingungen einstellen und verteilen sich entsprechend zwischen Brüden und Sumpfprodukt.

Abdestillierte organische Komponenten werden dann anschließend zusammen mit dem Glycerin pyrolysiert und können somit ebenfalls zur Wasserstoffproduktion verwendet werden. Bei der herkömmlichen Aufreinigung zur Herstellung von Pharmaglycerin werden entsprechende Komponenten hingegen abgetrennt und müssen gegebenenfalls unter nicht unbeträchtlichem Kostenaufwand entsorgt werden.

lm Rahmen der vorliegenden Anmeldung kann der die Salze und nichtverdampften MONG-Anteile enthaltende Verdampfungsrückstand als hochviskose, volumenreduzierte Flüssigkeit aus dem Sumpf des Verdampfers ausgetragen werden. Das übergehende Wasser kann ohne beträchtlichen zusätzlichen Energieeintrag im anschließenden Dampfreformierungsprozess zum Einsatz kommen. Hierbei kann vorteilhafterweise auch eine gezielte Steuerung der Verdampfungsbedingungen erfolgen, so dass der gewünschte Wasseranteil bereits im dem Aufbereitungsschritt einstellbar ist. Durch den übergehenden Wasserdampf kann auch ein Energieeintrag für ein nachfolgendes Pyrolyseverfahren erfolgen.

Mit anderen Worten wird durch das erfindungsgemäße Verfahren eine Reinigung des Rohglycerins ermöglicht, durch die zuverlässig, kostengünstig und unaufwendig gezielt nur die für ein nachgeschaltetes thermisches Verfahren unerwünschten Komponenten entfernt werden.

Die Dünnschichtverdampfung an sich ist bekannt. Die Verdampfung erfolgt in einem Dünnschichtverdampfer aus einem dünnen Flüssigkeitsfilm heraus. Das zu trennende Stoffgemisch wird hierzu über ein rotierendes Verteilersystem von oben auf dem Umfang eines zylindrischen Verdampfers verteilt und fließt an dessen Innenfläche nach unten. Ein Wischsystem sorgt für eine gleichmäßige Verteilung auf der Innenfläche und für eine permanente Durchmischung des nach unten fließenden Materials.

Der Verdampfer ist in der Regel doppelwandig ausgeführt. Zur gleichmäßigen Beheizung der Verdampferfläche wird ein Wärmeträgermedium (z. B. Thermalöl oder Dampf) durch den Doppelmantel geführt. Aus dem nach unten ablaufenden Flüssigkeitsfilm verdampfen, abhängig von der Temperatur der Flüssigkeit und von dem Betriebsdruck im Verdampfer, die leichter füchtigen Stoffe. Die Brüden werden im Gegenstrom zum Flüssigkeitsfilm nach oben geführt.

Der Betriebsdruck in Dünnschichtverdampfern liegt in der Regel bei einem Absolutdruck von 1 mbar bis 1 bar, also im Vakuumbereich bis hin zu Atmosphärendruck. Die Dünnschichtverdampfung ermöglicht einerseits eine deutliche Reduzierung der Verdampfungstemperaturen im Vergleich zu anderen Verdampfungsverfahren. Die Verweilzeit des zugeführten Stoffgemisches auf Verdampfungstemperatur ist andererseits sehr kurz und beträgt häufig deutlich weniger als eine Minute. Aufgrund der niedrigen Verweilzeit können höhere Verdampfungstemperaturen verwendet werden, ohne dass thermische Zersetzungsprozesse zu befürchten wären.

Es wurde herausgefunden, dass bei der Dünnschichtverdampfung von Rohglycerin im Gegensatz zu den üblicherweise verwendeten Temperaturen von ca. 160 °C mit besonderem Vorteil eine Temperatur von 170 bis 240 °C, vorteilhafterweise eine Temperatur von mehr als 200 °C, insbesondere von 200 bis 240 °C, vorzugsweise von 200 bis 220 °C verwendet werden kann, ohne dass das Glycerin Zersetzungsprozesse aufzeigt. Mit den höheren Verdampfungstemperaturen geht auch ein höherer Verdampfungsdruck einher, der sich einfach und kostengünstig durch vereinfachte Vakuumeinrichtungen erreichen lässt.

Als besonders vorteilhaft hat sich in diesem Zusammenhang ein Absolutdruck von 50 bis 85 mbar herausgestellt.

Als besonderer Vorteil der Dünnschichtverdampfung hat sich gezeigt, dass durch den gezielten Einsatz der angegebenen höherer Verdampfungstemperaturen bzw. -drücke ein sogenannter Wasserflash (also schlagartiges Verdampfen von Wasser bei Druckabfall und Bildung von Aerosolen bzw. Wassertröpfchen) vermieden werden kann. Hierdurch wird die Hauptursache der Bildung salzhaltiger Aerosole, die in das Destillat übergehen können, sicher eliminiert.

Wie bereits erläutert, eignet sich das vorgestellte Verfahren insbesondere zur Behandlung von glycerinhaltigen Stoffen wie Roh- oder Substandardglycerin, wie es bei der Biodieselherstellung anfällt.

Für eine weitere Aufreinigung, insbesondere zur Entfernung von Salzen, kann das Verdampfungsprodukt, also die durch die Dünnschichtverdampfung erzeugten Brüden, durch wenigstens eine Wascheinrichtung, beispielsweise einen Brüdenwäscher, gereinigt werden. Auch bei hohen Salzfrachten kann hierdurch eine sicherere Verfahrensführung ohne die Gefahr von Katalysatorschäden oder Korrosion erzielt werden, da der Salzübertrag durch Entrainment minimiert wird. Durch den Einsatz einer Wascheinrichtung kann besonders kosten- und energiesparend auf eine anderenfalls möglicherweise erforderliche zweite Destillationsstufe verzichtet werden.

Um einen Teil der in dem Eduktgemisch vorliegenden unerwünschten Stoffe bereits vor der erfindungsgemäßen Aufbereitung abzutrennen, kann dieses auch einem zusätzlichen Reinigungsverfahren, beispielsweise einer Destillation, einer thermischen Trocknung, einer Filterung über Aktivkohle und/oder eine Membran und/oder einem Chromatographie-, lonenaustauscher- und/oder lonenausschlussverfahren unterworfen werden.

Als besonders vorteilhafte und kostengünstige Verfahren haben sich in diesem Zusammenhang die Vortrocknung und die Verseifung herausgestellt. Die Vortrocknung, an sich bekannt, kann insbesondere bei hohen Wassergehalten zum Einsatz kommen. Sie erfordert zwar den Einsatz einer zusätzlichen Vorrichtung und zusätzlichen Energieeinsatz, andererseits kann jedoch hierdurch der erforderliche Energieeintrag in das Dünnschichtverdampfungssystem aufgrund des geringeren zu erwärmenden Gesamtvolumens sowie einer bereits erfolgten Vorwärmung verringert werden.

Auch hierbei kann vorteilhafterweise eine steuernde Beeinflussung des Wassergehalts für spätere, Wasser benötigende Reaktionsschritte erfolgen. Je nach eingesetzter Rohglycerinqualität kann der MONG-Gehalt stark schwanken und die Qualität des Destillationsprodukts, beispielsweise durch organische Chloride, beeinflussen. Durch eine gezielte Einstellung des pH-Werts kann beispielsweise eine Verseifung von Alkansäuren bewirkt werden, die aufgrund des höheren Siedepunkts im Sumpfprodukt verbleiben.

Das erfindungsgemäß ebenfalls vorgesehene Verfahren zur Erzeugung eines wasserstoffhaltigen Produktgemischs aus dem Zwischenprodukt, wie es durch das Aufbereitungsverfahren erhalten wurde, beinhaltet die Pyrolyse des Zwischenprodukts unter Erhalt eines Pyrolyseprodukts, sowie dessen Umsetzung zu einem wasserstoffhaltigen Produktgemisch. Das Pyrolyseprodukt liegt rein gasförmig vor. Auf diese Weise entfallen technisch und wirtschaftlich aufwändige Reinigungsschritte vor Eintritt in den Umsetzungsschritt.

Es versteht sich, dass das wasserstoffhaltige Produktgemisch weiteren Verarbeitungsschritten, beispielsweise einer Wassergas-Shiftreaktion unterworfen werden kann, bei der vorzugsweise große Teile des im Produktgemisch enthaltenen Kohlenmonoxids mit Wasser zu Wasserstoff und Kohlendioxid umgesetzt werden (Gleichgewichtsreaktion). Das Produktgemisch wird dadurch wirksam entgiftet. Alternativ oder zusätzlich kann auch beispielsweise ein
Druckwechseladsorptionsverfahren zum Erhalt hochreinen Wasserstoffs verwendet werden.

Mit besonderem Vorteil kann zur Umsetzung des Zwischenproduktes eine Dampfreformierung und/oder eine partielle Oxidation verwendet werden, wie beispielsweise in den Anmeldungen DE 10 2007 007 022 962 A1 und 10 2006 020 985 A1 der Anmelderin offenbart und ausführlich erläutert.

Als Dampfreformer kann vorzugsweise ein Rohrreaktor, wie er auch beispielsweise für die Dampfreformierung von Methan eingesetzt wird, verwendet werden. Der Dampfreformer kann wenigstens ein Katalysatormaterial aufweisen, das aus Nickel, Platin, Palladium, Eisen, Rhodium, Ruthenium und/oder lridium ausgewählt ist. Vorteilhafterweise handelt es sich bei dem Katalysatormaterial um ein Material, das auch zur katalytisch unterstützten Dampfreformierung von Naphtha oder Methan geeignet ist. Durch die Verwendung bekannter Rohrreaktoren und Katalysatoren können Anlagekomponenten mit geringen zusätzlichen Kosten auch für die Wasserstoffherstellung aus Rohglycerin verwendet werden.

Bevorzugt kann die Pyrolyse in der Konvektionszone eines entsprechenden Dampfreformers durchgeführt werden, die zu diesem Zweck als Pyrolysereaktor ausgebildet ist. Die Pyrolyse kann auch unter Zuführung von Wasser, Dampf und/oder einem Oxidationsmittel durchgeführt werden, wobei es sich bei dem Oxidationsmittel beispielsweise um Luft, um mit Sauerstoff angereicherte Luft oder um Sauerstoff handeln kann. Die Pyrolyse kann jedoch mit besonderem Vorteil unter Luftabschluss durchgeführt werden. Es hat sich gezeigt, dass eine besonders vorteilhafte Pyrolyse eines entsprechend aufbereiteten Zwischenprodukts unter Erhalt rein gasförmiger Pyrolyseprodukte bei einer Temperatur von 500 bis 750 °C und einem Absolutdruck von 20 bis 40 bar erfolgt. Das Pyrolyseprodukt enthält dabei im wesentlichen Kohlenmonoxid, Methan, Wasserstoff und Kohlendioxid. Die genannten Pyrolysebedingungen können durch Anpassung von Temperatur, Druck und Wassergehalt sowie der Art des Wärmeeintrages und damit der Verweilzeiten derart optimiert werden, dass die Bildung fester und flüssiger Produkte weitestgehend vermieden wird.

Der benötigte Energieeintrag für die Pyrolyse und die Dampfreformierung erfolgt im Gegensatz zu bekannten Verfahren nichtelektrisch. Die Verfahrensschritte werden in einer geeigneten Vorrichtung stationär durchgeführt. Der benötigte Energieeintrag erfolgt über Strahlungs- oder/und Konvektionswärme. Wird beispielsweise über Druckwechseladsorption der Wasserstoff von einem Produktgemisch abgetrennt, kann das neben hochreinem Hochdruckwasserstoff als Produkt erhaltene Restgas durch Verbrennung einen Teil der benötigten Energie abdecken und damit den Gesamtwirkungsgrad erhöhen.

Ein verwendbarer Reaktor zur partiellen Oxidation weist vorteilhafterweise einen Brenner auf, über den ein Pyrolyseprodukt und ein Oxidationsmittel, vorzugsweise Luft, mit Sauerstoff angereicherte Luft oder Sauerstoff, und/oder Wasserdampf getrennt oder als Stoffgemisch zuführbar sind. Ein entsprechender Brenner weist hierzu konzentrisch angeordnete Ringspalte auf und ist mit wenigstens einem Drallkörper ausgestattet, durch den ein über den Brenner zugeführtes Stoffgemisch mit einem tangentialen Drall beaufschlagbar ist. Der Brenner weist Kühlkanäle auf und ist zumindest in Teilen aus einem hochtemperaturfesten Material hergestellt. Zweckmäßigerweise wird der Wasser- bzw. Wasserdampfgehalt des aus dem Eduktgemisch aufbereiteten Zwischenprodukts durch Hinzufügen oder Entfernen von Wasser bzw. Wasserdampf auf einen Wert eingestellt, der die Durchführung einer nachfolgenden Pyrolyse ohne Rußbildung und bei gleichzeitig minimalem Energieeinsatz ermöglicht. Wie erwähnt, kann der Wasser- bzw. Wasserdampfgehalt auch bereits durch die Einstellung des Wassergehalts des Eduktgemischs durch Vortrocknung oder durch Wahl der Verdampfungsbedingungen voreingestellt werden. Eine andere Ausgestaltung des erfindungsgemäßen Verfahrens sieht vor, das für die Pyrolyse benötigte Wasser in mehr als einem Schritt, vor und/oder während der Pyrolyse an geeigneter Stelle gestuft zuzuführen. Wird die Pyrolyse in mehreren aufeinander folgenden Schritten durchgeführt, so erfolgt die Wasserzuführung sinnvollerweise jeweils vor einem Pyrolyseschritt.

Wird das Zwischenprodukt der Pyrolyse in flüssiger Form zugeführt, so wird Wasser vorzugsweise in Form von Wasserdampf eingebracht, wobei der Wasserdampf in das Zwischenprodukt oder das Zwischenprodukt in den Wasserdampf eingedüst wird. Mit dem Wasserdampf wird bereits ein erheblicher Teil der für die nachfolgende Pyrolyse benötigten Energie eingebracht, was zu einem verminderten Heizaufwand im Pyrolysereaktor und zu einer Reduzierung des apparativen Aufwandes für den Pyrolysereaktor führt.

Der Energieverbrauch des erfindungsgemäßen Verfahrens wird unter anderem von der im Dampfreformer zu erwärmenden Wassermenge beeinflusst. Je größer diese Wassermenge, desto höher der Energiebedarf. Um den Energiebedarf des erfindungsgemäßen Verfahrens zu optimieren, weist der dem Dampfreformer zugeführte Einsatz daher sinnvollerweise nur einen Mindestwassergehalt auf, dessen Größe durch die nachfolgenden Verfahrensschritte bestimmt wird. Der Mindestwassergehalt ergibt sich aus der Forderung, dass die Rußbildung im Dampfreformer vollständig unterdrückt wird und gleichzeitig genügend Wasser im Produktgemisch verbleibt, um sich an die Dampfreformierung anschließende, Wasser verbrauchenden Verfahrensschritte (z.B. eine Wassergas-Shiftreaktion) ohne weitere Zuführung von Wasser durchführen zu können. Zweckmäßigerweise wird daher der Wasser- bzw. der Wasserdampfgehalt des Zwischenproduktes durch Hinzufügen oder Entfernen von Wasser- bzw. Wasserdampf vor der Dampfreformierung auf den Mindestwassergehalt eingestellt.

Eine zur Durchführung des erfindungsgemäßen Verfahrens geeignete Vorrichtung weist insbesondere einen Dünnschichtverdampfer, durch den ein glycerinhaltige Eduktgemisch aufbereitbar ist, eine Pyrolyseeinrichtung, in der das durch die Aufbereitung erhaltene Zwischenprodukt pyrolysierbar ist, und eine Umsetzungseinrichtung, in welcher aus einem in der Pyrolyseeinrichtung erzeugten Pyrolyseprodukt das wasserstoffhaltige Produktgemisch herstellbar ist, auf.

Vorteilhafterweise bilden ein Pyrolysereaktor und ein Katalysereaktor (beispielsweise ein Dampfreformer) eine bauliche Einheit. Der benötigte Energieeintrag für die Pyrolysereaktion sowie für die Dampfreformierung erfolgt über Strahlungs- oder/und Konvektionswärme. So kann der Pyrolysereaktor durch Konvektionswärme aber auch durch Strahlungswärme betrieben werden. Bevorzugt ist eine Installation von Pyrolysereaktor und Dampfreformer in einer Strahlungszone. Durch diese verfahrenstechnische Umsetzung können insbesondere die Energieverluste, beispielsweise über ein Leitungssystem, minimal gehalten werden.

Zu weiteren Vorteilen der erfindungsgemäßen Vorrichtung wird auf die zuvor erläuterten Verfahrensmerkmale ausdrücklich verwiesen.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

### Figurenbeschreibung

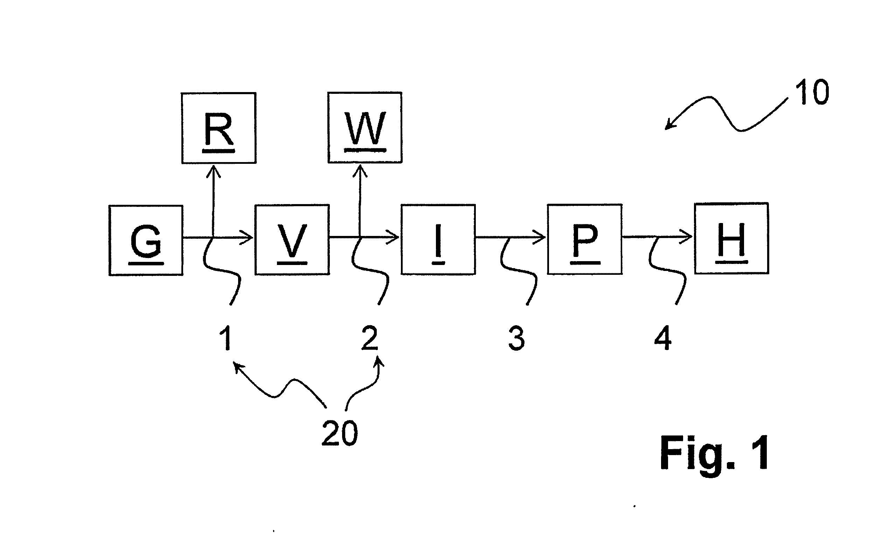

Figur 1 zeigt eine schematische Darstellung eines gemäß einer besonders bevorzugten Ausführungsform der Erfindung ablaufenden Verfahrens.

ln der einzigen Figur 1 ist ein gemäß einer besonders bevorzugten Ausführungsform der Erfindung ablaufendes Verfahren dargestellt und insgesamt mit 10 bezeichnet.

ln dem Verfahren wird ein glycerinhaltiges Eduktgemisch G, beispielsweise Rohglycerin aus der Biodieselherstellung, eingesetzt. Es versteht sich, dass das Eduktgemisch G in entsprechender Weise aufbereitet, beispielsweise vorgereinigt, getrocknet, verseift und/oder gefiltert werden kann.

Aus dem Eduktgemisch G wird durch Dünnschichtverdampfung 1 ein Verdampfungsprodukt V erhalten. Ferner wird in der Dünnschichtverdampfung 1 ein Rückstand R in Form des Sumpfprodukts erhalten, das kontinuierlich oder intermittierend aus dem Dünnschichtverdampfer abgezogen wird. Der Rückstand R kann zur besseren Deponierung und/oder Verwertung weiterbehandelt, beispielsweise granuliert oder gewaschen werden.

Das Verdampfungprodukt, beispielsweise in Form der Brüden, wird in einem Waschschritt 2, beispielsweise in einem Brüdenwäscher, gewaschen und optional weiter aufbereitet. lm Ergebnis wird ein Zwischenprodukt l erhalten. lm Rahmen der weiteren Aufbereitung 2 wird beispielsweise eine wasserförmige Salzlösung als beladener Waschrückstand W erhalten, welcher ebenfalls in geeigneter Weise weiterbehandelt werden kann.

Die Dünnschichtverdampfung 1 und die anschließende Waschung 2 können als bevorzugter erfindungsgemäßer Aufbereitungsschritt 20 aufgefasst werden.

Das Zwischenprodukt l wird nun durch Pyrolyse 3 zu einem rein gasförmigen Pyrolyseprodukt P umgesetzt.

Das Pyrolyseprodukt P wird in Verfahrensschritt 4 beispielsweise in einem Dampfreformer mit katalytischer Unterstützung in das wasserstoffhaltige Produktgemisch H, ein überwiegend Wasserstoff und Kohlenmonoxid enthaltendes Produktgemisch, umgesetzt.

Das Verfahren kann ferner weitere, hier nicht dargestellte Verfahrensschritte zur Weiterbehandlung des Produktgemischs P beinhalten, wie beispielsweise eine Wassergas-Shiftreaktion und/oder eine Gaswechseladsorption.

## Patentansprüche

1. Verfahren (20) zur Aufbereitung (1, 2) eines glycerinhaltigen Eduktgemischs (G) zu einem Zwischenprodukt (I), insbesondere in einem Verfahren (10) zur Erzeugung eines wasserstoffhaltigen Produktgemischs (H) aus dem Zwischenprodukt (I) mittels Pyrolyse (3) unter Erhalt eines Pyrolyseprodukts (P) und katalytischer Umsetzung (4) des Pyrolyseprodukts (P), **dadurch gekennzeichnet, dass** die Aufbereitung (1, 2) das zumindest teilweise Verdampfen (1) des Eduktgemischs (G) durch Dünnschichtverdampfung unter Erhalt eines Verdampfungsprodukts (V) beinhaltet.

2. Verfahren (20) nach Anspruch 1, **dadurch gekennzeichnet, dass** das Verdampfen (1) des Eduktgemischs (G) bei einer Temperatur von mehr als 200 °C, insbesondere von 200 bis 240 °C, vorzugsweise von 200 bis 220 °C durchgeführt wird.

3. Verfahren (20) nach einem der vorstehenden Ansprüche, **dadurch gekennzeichnet, dass** das Verdampfen (1) des Eduktgemischs (G) bei einem Absolutdruck von 50 bis 85 mbar durchgeführt wird.

4. Verfahren (20) nach einem der vorstehenden Ansprüche, **dadurch gekennzeichnet, dass** die Aufbereitung (1, 2) das Waschen des Verdampfungsprodukts (V) in einem Wäscher beinhaltet.

5. Verfahren (20) nach einem der vorstehenden Ansprüche, gekennzeichtet durch Einsetzen glycerinhaltiger Stoffe, insbesondere von Rohglycerin oder Substandardglycerin, vorzugsweise aus der Biodieselherstellung, als Eduktgemisch (G).

6. Verfahren (20) nach einem der vorstehenden Ansprüche, **gekennzeichnet durch** Vorbehandeln des Eduktgemischs (G) **durch** Reinigen, Trocknen und/oder Verseifen.

7. Verfahren (10) zur Erzeugung eines wasserstoffhaltigen Produktgemischs (H) aus einem aus einem glycerinhaltigen Eduktgemisch (G) hergestellten Zwischenprodukt (l) mittels Pyrolyse unter Erhalt eines Pyrolyseprodukts (P) und Umsetzung des Pyrolyseprodukts (P), **dadurch gekennzeichnet, dass** die Herstellung des Zwischenprodukts ein Verfahren (20) gemäß einem der vorstehenden Ansprüche beinhaltet.

8. Verfahren (10) nach Anspruch 7, **gekennzeichnet durch** Umsetzung des Pyrolyseprodukts (P) **durch** Dampfreformierung und/oder partielle Oxidation.

9. Verfahren nach einem der vorstehenden Anspüche, **gekennzeichnet durch** Einstellen eines Wassergehalts des Eduktgemischs (G), des Verdampfungsprudukts (V), des Zwischenprodukts (l), des Pyrolyseprodukts (P), und/oder des Produktgemischs (H).

10. Vorrichtung, die zur Durchführung eines Verfahrens gemäß einem der Ansprüche 7 bis 9 eingerichtet ist, mit einem Dünnschichtverdampfer, einer Wascheinrichtung, einer Pyrolyseeinrichtung und einer Umsetzungseinrichtung.
